# EUROPÄISCHE PATENTSCHRIFT

(11) **EP 3 456 590 B1**
(45) Veröffentlichungstag und Bekanntmachung des Hinweises auf die Patenterteilung: **15.03.2023**
(21) Anmeldenummer: 18188931.2
(22) Anmeldetag: 14.08.2018
(51) Int. Cl.: B60R 9/06, B60D 1/06

(54) **HALTEKUPPLUNG**
HOLDER COUPLING
ACCOUPLEMENT DE RETENU

(30) Priorität: 15.09.2017 DE 102017121429
(43) Veröffentlichungstag der Anmeldung: 20.03.2019
(73) Patentinhaber: ACPS Automotive GmbH, 74379 Ingersheim (DE)
(72) Erfinder: Gentner, Wolfgang, 71711 Steinheim (DE); Kadnikov, Aleksej, 71229 Leonberg (DE); Rimmelspacher, Bernhard, 76287 Rheinstetten (DE); Nägele, Stefan, 74354 Besigheim (DE)
(74) Vertreter: Hoeger, Stellrecht & Partner Patentanwälte mbB

(56) Entgegenhaltungen:
- EP-A1- 2 962 899
- DE-A1-102014 008 272
- US-A1- 2014 103 618
- US-B1- 6 485 243

## Beschreibung

Die Erfindung betrifft eine Haltekupplung für ein Kraftfahrzeug zur Montage einer Lastenträgereinheit an dem Kraftfahrzeug, umfassend einen mit einem ersten Ende mittels eines Haltearmträgers an einer Kraftfahrzeugkarosserie montierbaren Haltearm, der an einem an ein zweites Ende angrenzenden Armabschnitt mit einer einen Anhängebetrieb ausschließenden Lastenträgeraufnahme versehen ist, wobei der Haltearm einen sich von dem Haltearmträger entgegengesetzt zu einer Fahrtrichtung weg erstreckenden ersten Armabschnitt aufweist, welcher in einen zweiten, relativ zum ersten Armabschnitt gekrümmten Armabschnitt übergeht, an welchen sich ein dritter in einer Tragstellung ungefähr parallel zu einer vertikalen Richtung verlaufender Armabschnitt anschließt, der mit der Lastenträgeraufnahme versehen ist, dass die Lastenträgeraufnahme einen an dem dritten Armabschnitt nahe des zweiten Endes des Haltearms angeordneten nichtsphärisch geformten Ausrichtbereich aufweist.

Eine derartige Haltekupplung ist beispielsweise aus der US 2014/0103618 A1 bekannt.

Der Nachteil dieser Lösung ist jedoch darin zu sehen, dass diese aufwändig herzustellen ist.

Der Erfindung liegt daher die Aufgabe zugrunde, eine Haltekupplung zur Montage einer Lastenträgereinheit derart zu verbessern, dass diese einerseits möglichst stabil und andererseits möglichst einfach aufgebaut ist.

Diese Aufgabe wird bei einer Haltekupplung der eingangs beschriebenen Art erfindungsgemäß dadurch gelöst, dass an dem Haltearm auf einer dem zweiten Ende gegenüberliegenden Seite des Führungsbereiches auf einander gegenüberliegenden Seiten Positionierkörper angeordnet sind, die sich quer zu dem jeweiligen diese tragenden Armabschnitt von diesem weg erstrecken und umfangseitig quer zu einer Außenfläche des Haltearms verlaufende Positionierflächen tragen.

Der Vorteil der erfindungsgemäßen Lösung ist darin zu sehen, dass diese einerseits eine einfache konstruktive Lösung darstellt und andererseits die Möglichkeit bietet, eine Lastenträgereinheit stabil an der Lastenträgeraufnahme zu lagern.

Hinsichtlich der Gestaltung des Ausrichtbereichs wurde im Zusammenhang mit der vorstehenden Definition der erfindungsgemäßen Lösung nicht näher auf die Form eingegangen.

So sieht eine vorteilhafte Lösung vor, dass eine Außenkontur des Ausrichtbereichs in einer durch die Mittelachse des dritten Armabschnitts verlaufenden geometrischen Querschnittsebene im Bereich ihres maximalen Abstandes von der Mittelachse spiegelsymmetrisch Krümmungsradien aufweist, die mindestens dem zweifachen maximalen Abstand der Außenkontur, vorzugsweise dem vierfachen maximalen Abstand der Außenkontur, von der Mittelachse entsprechen.

Der Vorteil dieser Lösung ist darin zu sehen, dass diese die Möglichkeit eröffnet, in einfacher Art und Weise eine nichtsphärisch geformte Außenkontur im Ausrichtbereich zu realisieren, die darüber hinaus einfach herstellbar ist.

Eine vorteilhafte Lösung sieht vor, dass die Außenkontur des Ausrichtbereichs in einer senkrecht zur Mittelachse verlaufenden Querschnittsebene zur Mittelachse rotationssymmetrisch jedoch räumlich nichtsphärisch zur Mittelachse des dritten Armabschnitts ausgebildet ist, so dass dadurch in einfacher Weise eine Lastenträgerhalteeinrichtung aufgenommen werden kann, die für eine Anhängekupplung mit einer Kupplungskugel konzipiert ist.

Ferner ist vorzugsweise vorgesehen, dass die Außenkontur des Ausrichtbereichs in durch die Mittelachse hindurch verlaufenden Querschnittsflächen als Rotationsellipsoid oder ähnlich eines Fasskörpers ausgebildet ist, so dass einerseits eine möglichst große Fläche zur Ausrichtung der Lastenträgerhalteeinrichtung zur Verfügung steht die andererseits einfach hergestellt werden kann.

Die einfachste Form einer erfindungsgemäßen Außenkontur sieht vor, dass diese als Zylinderfläche ausgebildet ist.

Eine derartige Zylinderfläche wird im einfachsten Fall durch eine Außenfläche des dritten Armabschnitts gebildet, so dass bereits die Ausbildung des dritten Armabschnitts des Haltearms die Außenfläche definiert.

Eine andere vorteilhafte Lösung sieht vor, dass die Außenkontur bezogen auf eine Außenfläche des dritten Armabschnitts des Haltearms radial nach außen versetzt ist, insbesondere im Bereich ihres maximalen radialen Abstandes von der Mittelachse des dritten Armabschnitts.

Hinsichtlich der Ausbildung des Haltearms wurden im Zusammenhang mit der bisherigen Beschreibung der erfindungsgemäßen Lösung keine näheren Angaben gemacht.

Abweichend von einer in der senkrecht zur Mittelachse verlaufenden Querschnittsebene rotationssymmetrischen Außenkontur des Ausrichtbereichs sieht ein weiteres Ausführungsbeispiel vor, dass die Außenkontur des Ausrichtbereichs durch gerundete Kantenbereiche einer nicht rotationssymmetrischen Querschnittsform gebildet ist.

Insbesondere ist vorgesehen, dass die Außenkontur des Ausrichtbereichs in einer senkrecht zu einer Mittelachse des Halteabschnitts verlaufenden Querschnittsfläche bei einer Drehung um die Mittelachse als Drehachse eine mindestens zweizählige, insbesondere eine mindestens dreizählige Symmetrie bezüglich der Drehung um die Mittelachse aufweist.

Vorzugsweise liegen die gerundeten Kantenbereiche so, dass sie an einer Innenseite einer geometrischen Zylinderfläche um die Mittelachse, vorzugsweise mit einem Durchmesser von 50 mm, anliegen insbesondere sich an diese anschmiegen.

Somit kann der dritte Armabschnitt beispielsweise eine rechteckige oder dreieckige Querschnittsform jeweils mit gerundeten Kantenbereichen aufweisen.

So ist vorzugsweise vorgesehen, dass der Haltearm mit dem ersten Armbereich, dem zweiten Armbereich und dem dritten Armbereich als einstückiges Teil ausgebildet ist.

Im einfachsten Fall ist der Haltearm mit dem ersten Armbereich, dem zweiten Armbereich und dem dritten Armbereich einstückig aus einem Rundmaterial hergestellt.

Aus Gründen der Gewichtsersparnis hat es sich als besonders vorteilhaft erwiesen, wenn der Haltearm mit seinem ersten Armbereich, seinem zweiten Armbereich und dem dritten Armbereich aus einem Rohrstück geformt ist.

Eine konstruktiv besonders einfache Lösung sieht vor, dass das Rundmaterial des Haltearms im ersten Armbereich einen Durchmesser aufweist, der einem Durchmesser des Rundmaterials im dritten Armbereich entspricht.

Hinsichtlich der Ausbildung der Positionierkörper wurden im Zusammenhang mit der bisherigen Beschreibung der einzelnen Ausführungsbeispiele keine näheren Angaben gemacht.

So sieht eine vorteilhafte Lösung vor, dass die Positionierkörper an den Haltearm angeformt sind.

Eine andere vorteilhafte Lösung sieht vor, dass die Positionierkörper an dem Haltearm durch Fügen fixiert sind.

Eine weitere vorteilhafte Lösung sieht vor, dass die Positionierkörper durch Endbereiche eines den Haltearm durchsetzenden und an diesem fixierten Bolzens gebildet sind.

Ferner wurden hinsichtlich der Lage der Positionierkörper im Zusammenhang mit der Beschreibung der bisherigen Ausführungsbeispiele keine näheren Angaben gemacht.

Eine statisch vorteilhafte Lösung sieht vor, dass Positionierkörper auf einander gegenüberliegenden Seiten und spiegelsymmetrisch zu einer Längsmittelebene des Haltearms angeordnet sind.

Ferner sieht eine vorteilhafte Lösung vor, dass die Positionierkörper in einem Abstand von dem zweiten Ende des Haltearms angeordnet sind, der mindestens dem 2-fachen und höchstens dem 5-fachen eines maximalen Abstandes der Außenkontur des Ausrichtbereichs von der Mittelachse entspricht.

Noch besser ist es, wenn die Positionierkörper in einem Abstand von dem zweiten Ende des Haltearms angeordnet sind, der mindestens dem 2,5-fachen, höchstens jedoch dem 4-fachen maximalen Abstand der Außenkontur des Ausrichtbereichs von der Mittelachse entspricht.

Eine weitere vorteilhafte Ausführungsform der erfindungsgemäßen Haltekupplung sieht vor, dass an dem dritten Armabschnitt eine Haltefläche angeordnet ist, welche ein Rastkörper einer Lastenträgerhalteeinrichtung hintergreifen kann.

Darüber hinaus betrifft die Erfindung eine Lastenträgereinheit für eine eine Lastenträgeraufnahme aufweisende Haltekupplung, für eine Haltekupplung nach einem der voranstehenden Ansprüche, umfassend eine Lastenträgerhalteeinrichtung mit einer Ausrichtaufnahme zur Aufnahme des Ausrichtbereichs und fest mit der Ausrichtaufnahme verbundene Positionieraufnahmen zur Aufnahme der Positionierkörper der Lastenträgeraufnahme.

Vorzugsweise ist dabei die Lastenträgerhalteeinrichtung so ausgebildet, dass sie sich ausgehend von der Ausrichtaufnahme erstreckende Seitenwangen aufweist, in welchen die Positionieraufnahmen angeordnet sind.

Ferner sind die Positionieraufnahmen so ausgebildet, dass diese eine in Aufsetzrichtung der Lastenträgerhalteeinrichtung auf die Lastenträgeraufnahme vorneliegende Aufnahmeöffnungen aufweisen, durch welche die Positionierkörper in die Positionieraufnahmen eintauchen können.

Darüber hinaus sieht eine besonders günstige Ausführungsform einer erfindungsgemäßen Lastenträgerhalteeinheit vor, dass die Positionieraufnahmen im Anschluss an die Aufnahmeöffnung einander gegenüberliegende Führungswände aufweisen, zwischen denen die Positionierkörper in ihrer in die Positionieraufnahmen eingetauchten Stellung liegen.

Um die von der Lastenträgereinheit auf den Haltearm einwirkenden Kräfte durch die Lastenträgeraufnahme aufnehmen zu können ist vorzugsweise vorgesehen, dass die Positionieraufnahmen jeweils eine sich quer zu den Führungswänden erstreckende Tragwand aufweisen, mit denen sich die Lastenträgerhalteeinrichtung in Schwerkraftrichtung auf durch Umfangsflächenbereiche der Positionierkörper gebildeten Stützflächen abstützt.

Eine weitere vorteilhafte Ausbildung der erfindungsgemäßen Lastenträgereinheit sieht vor, dass die Lastenträgerhalteeinrichtung mit einem Rastkörper versehen ist, welcher in einer quer zur Aufsetzrichtung verlaufenden Rastrichtung bewegbar geführt ist und zur Fixierung der Lastenträgerhalteeinrichtung an der Lastenträgeraufnahme eine von der Lastenträgeraufnahme gebildete Haltefläche hintergreift und somit eine Bewegung der Lastenträgerhalteeinrichtung entgegengesetzt zur Aufsetzrichtung verhindert.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine teilweise schematische Ansicht eines Kraftfahrzeugs mit einer erfindungsgemäßen Haltekupplung;
- Fig. 2: eine vergrößerte, teilweise geschnittene Darstellung eines ersten Ausführungsbeispiels einer erfindungsgemäßen Haltekupplung mit einem Haltearm mit einer Lastenträgeraufnahme;
- Fig. 3: eine perspektivische Darstellung des Haltearms des ersten Ausführungsbeispiels mit der Lastenträgeraufnahme;
- Fig. 4: eine Ansicht der Lastenträgeraufnahme des Haltearms in Richtung eines Pfeils A in Fig. 3;
- Fig. 5: eine teilweise geschnittene Darstellung der Lastenträgeraufnahme des ersten Ausführungsbeispiels mit einer aufgesetzten Lastenträgerhalteeinrichtung einer Lastenträgereinheit;
- Fig. 6: eine Seitenansicht ähnlich Fig. 1 einer an dem Haltearm des ersten Ausführungsbeispiels der Haltekupplung gehaltenen Lastenträgereinheit;
- Fig. 7: eine Seitenansicht ähnlich Fig. 1 eines zweiten Ausführungsbeispiels einer erfindungsgemäßen Haltekupplung;

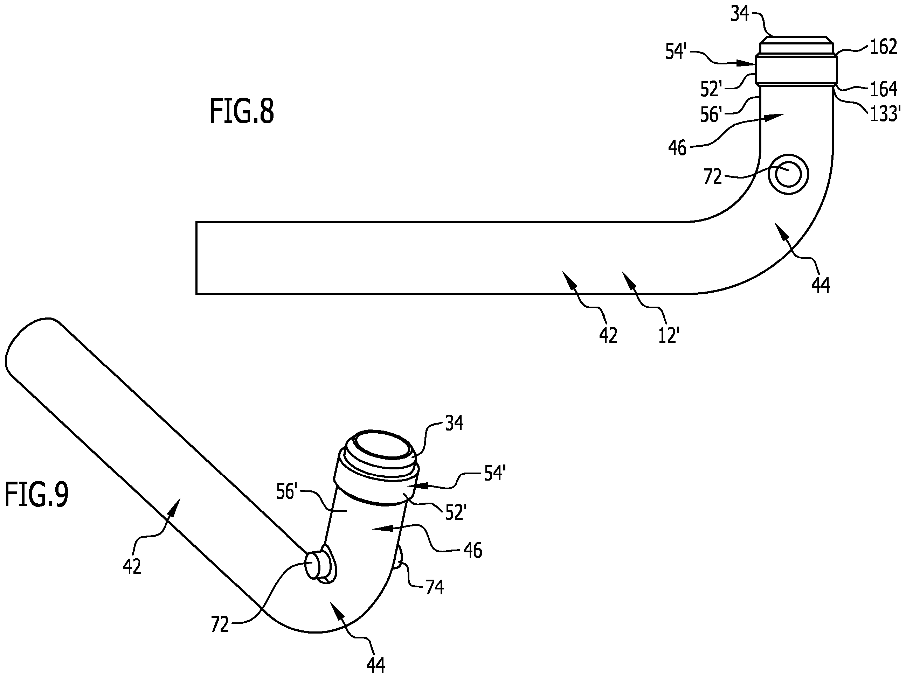

- Fig. 8: eine Seitenansicht ähnlich Fig. 2 eines Haltearms eines zweiten Ausführungsbeispiels der erfindungsgemäßen Haltekupplung;
- Fig. 9: eine perspektivische Ansicht ähnlich Fig. 3 des Haltearms des zweiten Ausführungsbeispiels der erfindungsgemäßen Haltekupplung;
- Fig. 10: eine teilweise Seitenansicht ähnlich Fig. 2 eines Haltearms eines dritten Ausführungsbeispiels einer erfindungsgemäßen Haltekupplung;
- Fig. 11: eine perspektivische Darstellung eines Haltearms eines vierten Ausführungsbeispiels einer erfindungsgemäßen Haltekupplung;
- Fig. 12: einen Schnitt durch den Haltearm des vierten Ausführungsbeispiels mit aufgesetzter Lastenträgerhalteeinrichtung längs Linie 12-12 in Fig. 13;
- Fig. 13: eine teilweise geschnittene Darstellung einer auf den Haltearm des vierten Ausführungsbeispiels aufgesetzten Lastenträgerhalteeinrichtung längs Linie 13-13 in Fig. 12;
- Fig. 14: eine perspektivische Darstellung des Haltearms eines fünften Ausführungsbeispiels einer erfindungsgemäßen Haltekupplung;
- Fig. 15: einen Schnitt ähnlich Fig. 12 längs Linie 15-15 in Fig. 16 und
- Fig. 16: eine teilweise geschnittene Darstellung einer auf das fünfte Ausführungsbeispiel der erfindungsgemäßen Haltekupplung aufgesetzten Lastenträgerhalteeinrichtung längs Linie 16-16 in Fig. 15.

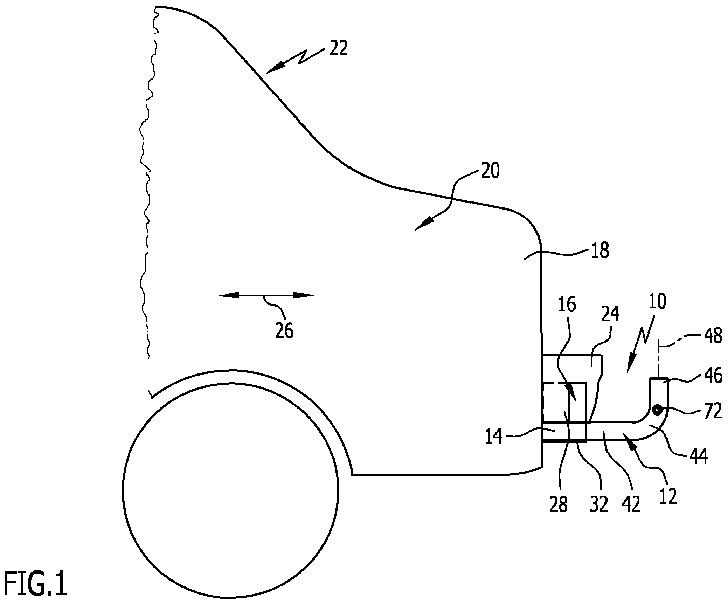

Ein in Fig. 1 dargestelltes Ausführungsbeispiel einer als Ganzes mit 10 bezeichneten Haltekupplung umfasst einen Haltearm 12, welcher an einem ersten Ende 14 mit einem Haltearmträger 16 verbunden ist, welcher seinerseits fest an einer Heckpartie 18 einer als Ganzes mit 20 bezeichneten Kraftfahrzeugkarosserie eines Kraftfahrzeugs 22 gehalten ist, wobei der Haltearmträger 16 vorzugsweise verdeckt durch eine hintere Stoßfängereinheit 24 des Kraftfahrzeugs 22 angeordnet und fest mit der Heckpartie 18 verbunden ist.

Der Haltearmträger 16 umfasst beispielsweise einen üblichen, sich unter der Stoßfängereinheit 24 und parallel zu dieser sowie quer zu einer Längsrichtung 26 der Kraftfahrzeugkarosserie 20 erstreckenden Querträger 28, welcher seinerseits mit der Heckpartie 18 verbunden ist.

Außerdem ist an dem Querträger 28 entweder eine Aufnahme gehalten, an welcher der Haltearm 12 mit dem ersten Ende 14 fest oder lösbar gehalten ist oder eine Schwenklagereinheit 32, mit welcher der Haltearm 12 um eine oder mehrere Achsen relativ zu der Heckpartie 18 zwischen einer Haltestellung, dargestellt in Fig. 1 und einer nicht dargestellten Ruhestellung bewegbar ist, in welcher sich der Haltearm 14 parallel zum Querträger 18 erstreckt und von der hinteren Stoßfängereinheit 24 weitgehend verdeckt zwischen dieser und der Heckpartie 18 der Kraftfahrzeugkarosserie angeordnet ist.

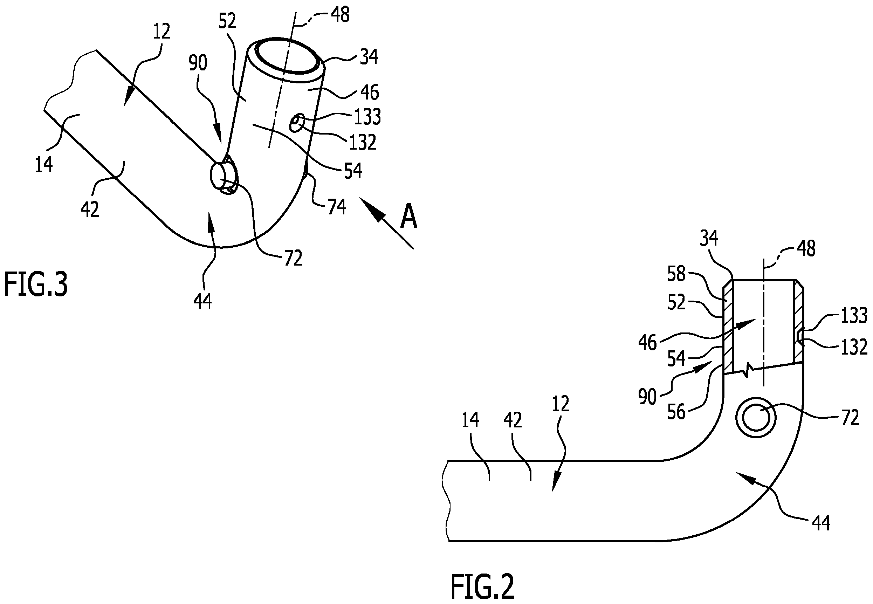

Wie in Fig. 1 und vergrößert in den Fig. 2 und 3 dargestellt, ist der Haltearm 12 zwischen seinem ersten Ende 14 und einem diesem gegenüberliegenden zweiten Ende 34 in mehrere Armabschnitte unterteilt.

So folgt auf das erste Ende 14 ein erster Armabschnitt 42, welcher mit dem Haltearmträger 16 verbunden ist und sich beispielsweise als gerade gerichteter oder leicht gekrümmter Armabschnitt bis zu einem zweiten Armabschnitt 44 erstreckt, welcher ausgehend von dem ersten Armabschnitt 42 bogenförmig ausgebildet ist und in einen dritten Armabschnitt 46 übergeht, der im Wesentlichen geradegerichtet verläuft und eine Mittelachse 48 aufweist, die in der in Fig. 1 dargestellten Arbeitsstellung ungefähr parallel zu einer Schwerkraftrichtung verläuft.

Unter einem ungefähr parallelen Verlauf des dritten Abschnitts 46 zu der Schwerkraftrichtung ist dabei zu verstehen, dass der Winkel zwischen der Mittelachse 48 und der Schwerkraftrichtung maximal 30°, noch besser maximal 20° beträgt, wenn das Kraftfahrzeug 22 auf einer horizontalen Ebene steht.

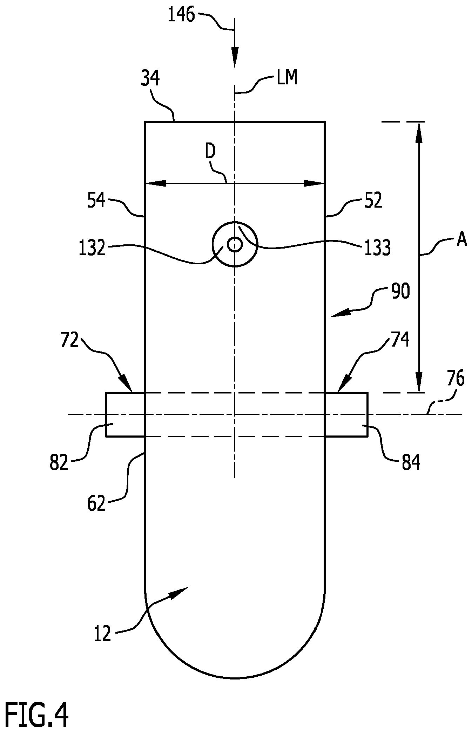

Wenn der Haltearm 12 dabei in der Haltestellung steht, erstreckt er sich ungefähr parallel zur Längsrichtung 26 der Kraftfahrzeugkarosserie 20 von der Heckpartie 18 desselben weg, wobei in diesem Fall die Mittelachse 48 in einer vertikalen Längsmittelebene LM der Kraftfahrzeugkarosserie 20 angeordnet ist (Fig. 4).

Der dritte Armabschnitt 46 umfasst seinerseits einen Ausrichtbereich 54, mit einer Außenkontur 52, welche eine bei dem ersten Ausführungsbeispiel zur Mittelachse 48 zylindrische Außenfläche 56 aufweist, wobei der Ausrichtbereich 54 dazu vorgesehen ist eine nachfolgend noch im Detail beschriebene Lastenträgereinheit ausgerichtet zu halten.

Bei dem in den Fig. 1 bis 3 dargestellten ersten Ausführungsbeispiel des erfindungsgemäßen Haltearms 12 ist die Außenkontur 52 im dritten Armabschnitt 46 als zur Mittelachse 48 zylindrische Außenfläche 56 des dritten Armabschnitts 46 ausgebildet.

Insbesondere ist bei dem ersten Ausführungsbeispiel vorgesehen, dass der Haltearm 12 aus einem im Querschnitt runden Rohr gebildet ist, wobei der erste Armabschnitt 42 beispielsweise ein erster Rohrabschnitt darstellt, der sich von dem ersten Ende 14 bis zum zweiten Armabschnitt 44 erstreckt und im einfachsten Fall gerade gerichtet ausgebildet ist, jedoch gegebenenfalls auch in einer Krümmung versehen sein kann.

Ferner ist der zweite Armabschnitt 44 durch eine Umbiegung des Rohrs gebildet, wie in den dritten Armabschnitt 46 übergeht, in welchem das Rohr wiederum gerade gerichtet und koaxial zur Mittelachse 48 verläuft, wobei wie in Fig. 2 dargestellt, das Rohr eine Rohrwand 58 mit einer für dessen Stabilität vorgesehenen Wandstärke aufweist.

Im dritten Armabschnitt 46 oder im zweiten Armabschnitt 44 oder an einem Übergang zwischen dem dritten Armabschnitt 46 und dem zweiten Armabschnitt 44 ist der Haltearm 12 beiderseits mit symmetrisch zu der Längsmittelebene LM der Kraftfahrzeugkarosserie 20 angeordneten und über eine Außenfläche 62 des jeweiligen Armabschnitts überstehenden Positionierkörpern 72, 74 versehen, die beispielsweise eine zu einer beiden Positionierkörpern 72 und 74 gemeinsamen Positionierkörperachse 76 zylindrische Umfangsfläche 82, 84 aufweisen, wobei sich die Positionierkörperachse 76 senkrecht zur Längsmittelebene LM des in der Haltestellung stehenden Haltearms 12 erstreckt.

Die Positionierkörper 72, 74 können dabei entweder auf den Haltearm 12 im Bereich der jeweiligen Außenfläche 62 aufgesetzte zylindrische Körper sein oder Endstücke eines den Haltearm 12 durchsetzenden massiven Bolzens 78 sein, der beispielsweise einen Durchbruch in der jeweiligen Rohrwand 58 des Haltearms 12 durchsetzt.

Beispielsweise sind die Positionierkörper 72, 74 in einem Abstand A von dem zweiten Ende 34 des Haltearms 12 angeordnet, der zwischen dem 1- bis 2,5-fachen eines Durchmessers D der Außenkontur 52 im Ausrichtbereich 54 entspricht.

Da sich die Umfangflächen 82, 84 der Positionskörper 72, 74 ausgehend von der jeweiligen Außenfläche 62 quer zu dieser, insbesondere senkrecht zu dieser erstrecken, eignen sich die Umfangsflächen 82, 84 der Positionskörper 72, 74 in vorteilhafter Weise dazu, zusätzlich zur Ausrichtung und Abstützung der zu montierenden Lastenträgereinheit beizutragen, so dass der Ausrichtbereich 54 mit seiner Außenkontur 52 und die Positionierkörper 72, 74 mit den Umfangsflächen 82, 84 eine Lastenträgeraufnahme 90 bilden.

Insgesamt bilden der Ausrichtbereich 54 mit der Außenkontur 52 sowie die Positionierkörper 72 und 74 mit den Umfangsflächen 82 und 84 zusammen die Lastenträgeraufnahme 90, die dazu dient, die Fixierung einer noch näher zu beschreibenden Lastenträgereinheit mittels einer Lastenträgerhalteeinrichtung 100 zu ermöglichen, die insbesondere für die Montage an einer konventionellen Anhängekupplung, umfassend einen Kugelhals mit einer Kupplungskugel sowie an dem Kugelhals angeordnete Positionierkörper entsprechend den Positionierkörpern 72 und 74, wie sie beispielsweise in der EP 2 962 899 A1 beschrieben sind, konzipiert ist.

Der Vorteil der erfindungsgemäßen Lösung ist jedoch darin zu sehen, dass die Ausbildung des Ausrichtbereichs 54 mit der zylindrischen, nichtsphärischen Außenfläche 56 das Anhängen eines Anhängers und somit einen Anhängerbetrieb mittels des Haltearms 12 verhindert, so dass der Haltearm 12 lediglich für die Belastungen durch eine Lastenträgereinheit konzipiert werden muss und die Belastungen, die bei einem Anhängerbetrieb auftreten könnten, nicht berücksichtigt werden müssen.

Damit eignet sich die erfindungsgemäße Haltekupplung zur Verwendung an Fahrzeugen, die nicht für einen Anhängerbetrieb vorgesehen sind, bei denen jedoch die Möglichkeit bestehen sollte konventionell für Anhängekupplungen konzipierte Lastenträgerhalteeinheiten einsetzen zu können, ohne dass die Lastenträgerhalteeinrichtung 100 konstruktiv verändert werden muss.

Auf die vorstehend beschriebene Haltekupplung 10 mit dem Haltearm 12 ist die als Ganzes mit 100 bezeichnete Lastenträgerhalteeinrichtung in einer Aufsetzrichtung 108 aufsetzbar, welche ein Gehäuse 101 umfasst, das mit einer Ausrichtaufnahme 102 den Ausrichtbereich 54 des dritten Haltearmabschnitts umgreift, so dass mittels des Ausrichtbereichs 54 mit seiner Außenkontur 52 die Ausrichtaufnahme 102, die beispielsweise eine zylindrische Innenkontur 104 aufweist, koaxial zur Mittelachse 48 des Ausrichtbereichs 54 positioniert ist.

Die Lastenträgereinheit 100 ist vorzugsweise in der Aufsetzrichtung 108 mit der Ausrichtaufnahme 102 auf den Ausrichtbereich 54 im dritten Armabschnitt 46 aufsetzbar, wobei gleichzeitig mit dem Aufsetzen der Ausrichtaufnahme 102 auf dem Ausrichtbereich 54 die Positionieraufnahmen 112 in den Seitenwangen 106 die Positionierkörper 72, 74 mit den Positionieraufnahmen 112 in Eingriff kommen.

Ferner umfasst die Lastenträgerhalteeinrichtung 100 fest mit dem Gehäuse 101 und der Ausrichtaufnahme 102 verbundene Seitenwangen 106, welche seitlich des zweiten Armabschnitts 44 und des dritten Armabschnitts 46 angeordnet sind und ihrerseits Positionieraufnahmen 112 aufweisen, welche einerseits eine in Aufsetzrichtung 108 vorne liegende Aufnahmeöffnung 114 aufweisen, an welche sich Führungswände 116 und 118 anschließen, die seitlich an die Umfangsflächen 82 und 84 der Positionierkörper 72, 74 anlegbar sind.

Die Führungswände 116 und 118 erstrecken sich beispielsweise ungefähr parallel zur Aufsetzrichtung 108.

Dabei ist unter einer ungefähr parallelen Erstreckung der Führungswände 116, 118 zur Aufsetzrichtung 108 zu verstehen, dass diese von einer parallelen Ausrichtung zur Aufsetzrichtung 108 um maximal ± 20° abweichen.

Zusätzlich umfasst beispielsweise die jeweilige Positionieraufnahme 112 noch eine Tragwand 122, welche quer zu der Aufsetzrichtung 108 verläuft und dadurch ermöglicht, dass sich die Lastenträgerhalteeinrichtung 100 mit der Tragwand 122 in Schwerkraftrichtung auf den Positionierkörpern 72, 74 abstützt, so dass insgesamt die gesamte Lastenträgereinheit 100 mit ihrer ungefähr in vertikaler Richtung einwirkenden Stützlast sich über die Tragwände 122 an den Positionierkörpern 72, 74 abstützen kann.

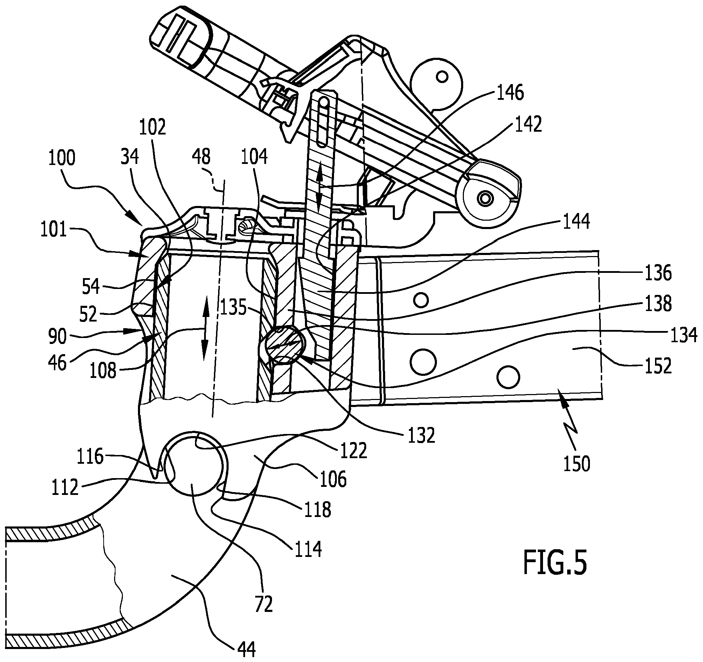

Zur Fixierung der Lastenträgerhalteeinrichtung 100 an dem Haltearm 12 ist vorzugsweise der Haltearm 12 im Bereich der Außenfläche 56 des dritten Armbereichs 46 mit einer eine Haltefläche 133 aufweisenden Eintiefung oder Ausnehmung 132 versehen, so dass, wie in Fig. 5 dargestellt, ein Rastkörper 134 die dem zweiten Ende 34 abgewandte Haltefläche 133 hintergreift und somit ein Bewegen der Lastenträgerhalteeinrichtung 100 entgegengesetzt zur Aufsetzrichtung 108 blockiert, wobei der Rastkörper 134 in einer Führungsbohrung 135 einer Wand 136 der Ausrichtaufnahme 102 in einer quer zur Aufsetzrichtung 108 verlaufenden Rastrichtung 138 in Richtung der Vertiefung 132 oder entgegengesetzt dieser bewegbar ist.

Zum Festlegen des Rastkörpers 134 in der die Lastenträgerhalteeinrichtung 100 an dem Haltearm 12 fixierenden Stellung ist in einer an der Lastenträgerhalteeinrichtung 100 vorgesehenen Führung 142, beispielsweise in einem Führungskanal, ein Keilkörper 144 in einer quer zur Rastrichtung 138 verlaufenden Bewegungsrichtung 146 bewegbar, mit welchem der Rastkörper 134 derart beaufschlagbar ist, dass dieser in die Vertiefung 132 eindringt, die Haltefläche 133 hintergreift, und in dieser Stellung verharrt, um somit ein Lösen der Lastenträgerhalteeinrichtung 100 durch eine Bewegung entgegengesetzt zur Aufsetzrichtung 108 und insbesondere der Ausrichtaufnahme 102 und der Positionieraufnahmen 112 von dem Ausrichtbereich 54 und den Positionierkörpern 72 und 74 des Haltearms 12 zu verhindern.

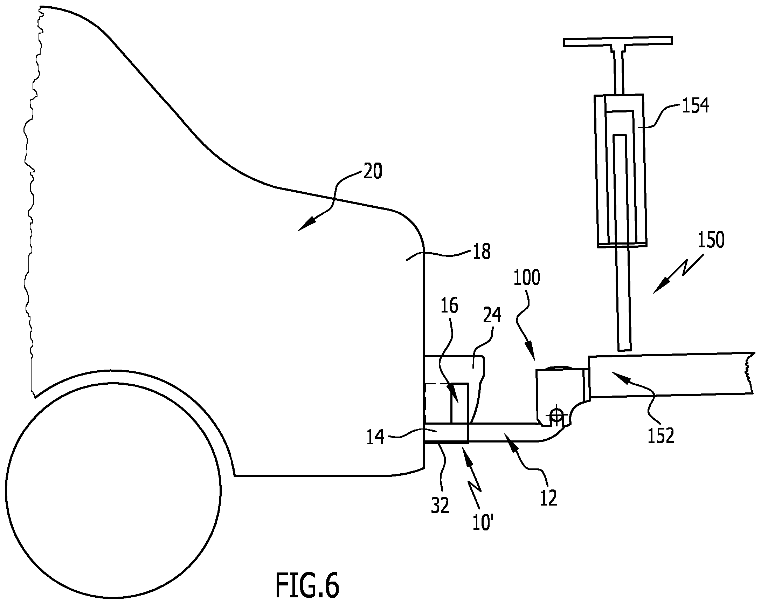

Ein mit einer in Fig. 5 dargestellten Lastenträgerhalteeinrichtung 100 versehener Lastenträger 150 lässt sich somit in einfacher Weise, wie in Fig. 6 dargestellt, an dem Haltearm 12 der Haltekupplung 10 fixieren, wobei mit der Lastenträgerhalteeinrichtung 100 ein Tragrahmen 152 der Lastenträgereinheit 150 verbunden ist, auf dem die jeweiligen Lasten, beispielsweise Fahrräder 154, zum Transport aufgestellt und gehalten werden können.

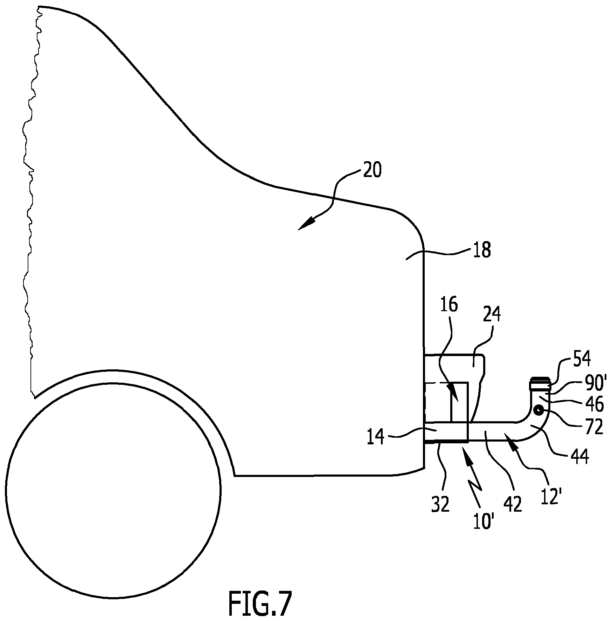

Bei einem zweiten Ausführungsbeispiel einer erfindungsgemäßen Haltekupplung 10', dargestellt in Fig. 7, sind diejenigen Teile, die mit denen des ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel verwiesen werden kann.

Im Gegensatz zum ersten Ausführungsbeispiel ist allerdings beim dritten Armabschnitt 46 die Außenfläche 56 desselben gegenüber der Außenkontur 52' des Ausrichtbereichs 54' radial zurückgesetzt, so dass die Außenkontur 52 des Ausrichtbereichs 54 relativ zur Außenfläche 56' des dritten Armabschnitts 46 erhaben verläuft und jeweils in Form einer Stufe 162 beziehungsweise 164 in die radial zurückgesetzte Außenfläche 56' übergeht.

Vorzugsweise bildet dabei die Stufe 164, die dem zweiten Ende des Haltearms 12 abgewandt ist, die Haltefläche 133' für den Rastkörper 134, so dass das Vorsehen der Vertiefung 132 entfällt.

Im Übrigen sind in gleicher Weise wie beim ersten Ausführungsbeispiel auch die Positionierkörper 72 und 74 vorgesehen, so dass diesbezüglich vollinhaltlich auf die Ausführungen zum ersten Ausführungsbeispiel verwiesen werden kann.

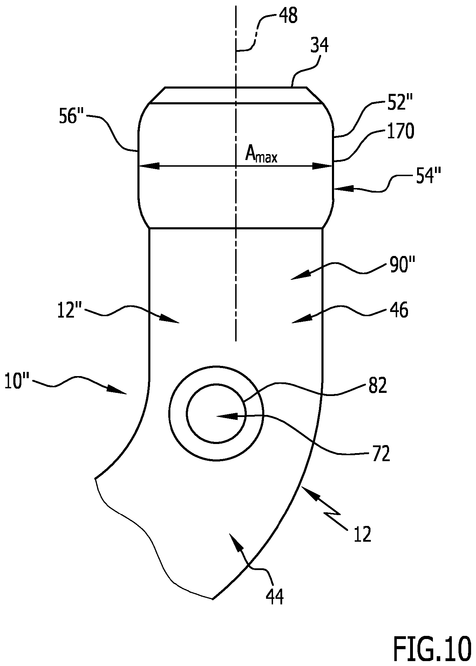

Bei einem dritten Ausführungsbeispiel einer erfindungsgemäßen Haltekupplung, dargestellt in Fig. 10, sind diejenigen Elemente, die mit denen der voranstehenden Ausführungsbeispiele identisch sind, mit denselben Bezugszeichen versehen, so dass hinsichtlich der Beschreibung derselben vollinhaltlich auf die Ausführungen zu den voranstehenden Ausführungsbeispielen Bezug genommen werden kann.

Im Gegensatz zu den voranstehenden Ausführungsbeispielen ist bei dem dritten Ausführungsbeispiel der Ausrichtbereich 54" mit einer Außenkontur 52" versehen, die in einer durch die Mittelachse 48 des dritten Armbereichs 46 hindurchlaufenden geometrischen Querschnittsebene, im Fall der Fig. 10 der Zeichenebene, im Bereich 170 eines maximalen Abstandes Amax von der Mittelachse 48 spiegelsymmetrisch zur Mittelachse 48 verläuft und in diesem Bereich Krümmungsradien aufweist, die mindestens dem 2-fachen maximalen Abstand Amax, vorzugsweise maximal dem 4-fachen maximalen Abstand Amax der Außenkontur 52" von der Mittelachse 48, entsprechen.

Dabei ist die Außenkontur 52" im Ausrichtbereich 54" nach wie vor rotationssymmetrisch zur Mittelachse 48 ausgebildet und kann allerdings in der durch die Mittelachse 48 verlaufenden geometrischen Querschnittsebene, die im Fall der Fig. 10 der Zeichenebene entspricht, entweder fassförmig oder entsprechend einem Rotationsellipsoid zur Mittelachse 48, insbesondere entsprechend der Querschnittsform eines prolaten Rotationsellipsoids, ausgebildet sein.

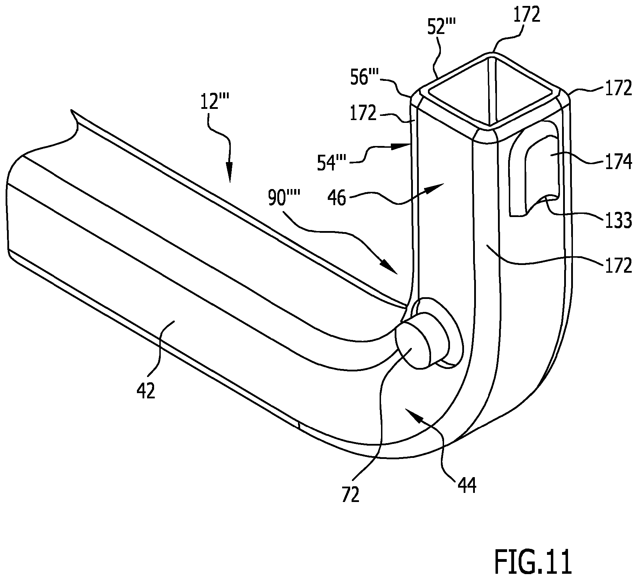

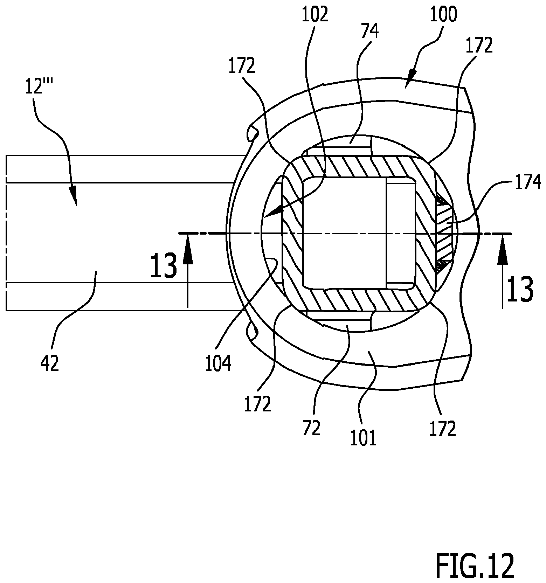

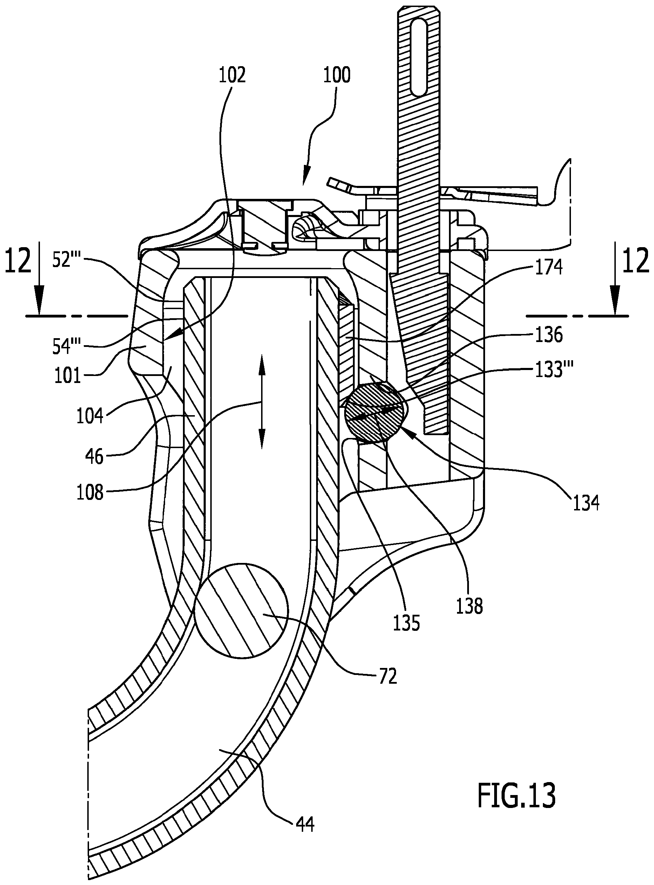

Bei einem vierten Ausführungsbeispiel einer erfindungsgemäßen Haltekupplung, dargestellt in den Fig. 11 bis 13, sind diejenigen Elemente, die mit denen der voranstehenden Ausführungsbeispiele identisch sind, mit denselben Bezugszeichen versehen, so dass hinsichtlich der Beschreibung derselben vollinhaltlich auf die Ausführungen zu den voranstehenden Ausführungsbeispielen Bezug genommen werden kann.

Im Gegensatz zu den voranstehenden Ausführungsbeispielen weist der Haltearm 12‴ im Bereich des ersten Armabschnitts 42, des zweiten Armabschnitts 44 und des dritten Armabschnitts 46 keinen runden Querschnitt auf sondern einen quadratischen Querschnitt, das heißt, dass in diesem Fall der Haltearm 12‴ mit dem ersten Armabschnitt 42, dem zweiten Armabschnitt 44 und dem dritten Armabschnitt 46 aus einem Vierkantrohr gebogen ist.

Dabei ist der Querschnitt des Vierkantrohrs so gewählt, dass sämtliche gerundeten Kantenbereiche 172 des dritten Armabschnitts 46 an einer Innenseite einer geometrischen Zylinderfläche anliegen und somit bei auf den Haltearm 12‴ aufgesetzter Lastenträgerhalteeinrichtung 100 an der der Zylinderfläche entsprechenden zylindrischen Innenkontur 104 der Ausrichtaufnahme 102 anliegen und somit durch die gerundeten Kantenbereiche 172 des dritten Armabschnitts der Ausrichtbereich 54‴ mittels der rechteckigen Außenkontur 52‴ gebildet wird, die allerdings die gerundeten Kantenbereiche 172 aufweist, mit denen eine Anlage an der zylindrischen Innenkontur 104 der Ausrichtaufnahme 102 erfolgt und somit in gleicher Weise wie bei den voranstehenden Ausführungsbeispielen eine Ausrichtung des Gehäuses 101 der Lastenträgerhalteeinrichtung 100 erfolgt.

Letztlich wird somit bei dem vierten Ausführungsbeispiel die Außenfläche 56‴ des Ausrichtbereichs die mit der zylindrischen Innenkontur 104 der Ausrichtaufnahme 102 zusammenwirkt, durch die insgesamt vier gerundeten Kantenbereiche 172 gebildet.

Zur Ausbildung der Haltefläche 133 ist in diesem Fall keine Eintiefung vorgesehen, sondern beispielsweise eine Aufdickung 174 oder auch eine Auswölbung oder Ausprägung, die die Haltefläche 133‴ ausbildet, welche der Rastkörper 134 zum Fixieren der Lastenträgerhalteeinrichtung 100 an dem Haltearm 12‴ hintergreift.

Darüber hinaus sind in gleicher Weise wie bei den voranstehenden Ausführungsbeispielen an dem Haltearm 12‴ die Positionierkörper 72 und 74 angeordnet, auf denen sich die Lastenträgerhalteeinheit 100 bei gleichzeitiger Führung durch den Ausrichtbereich 54‴ abstützt.

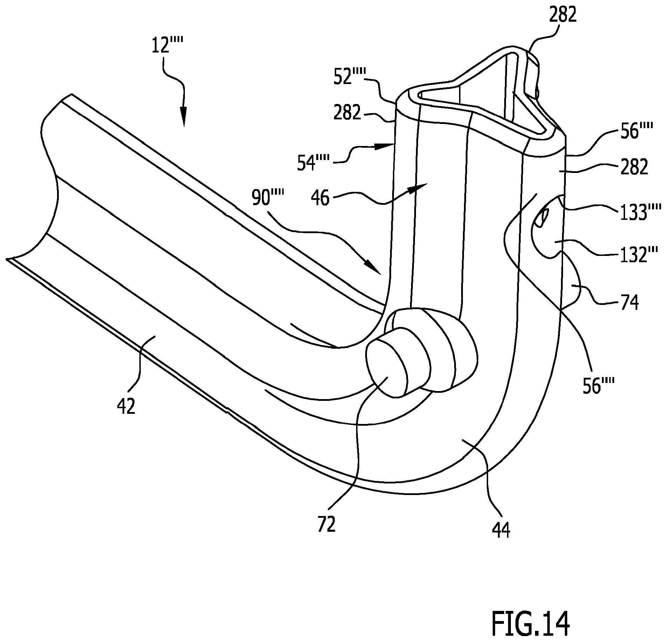

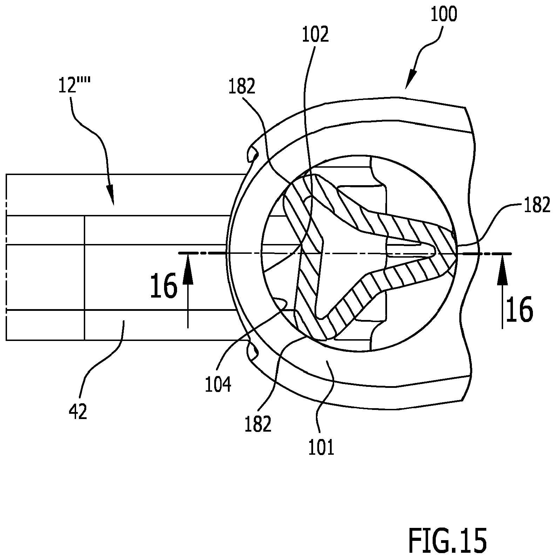

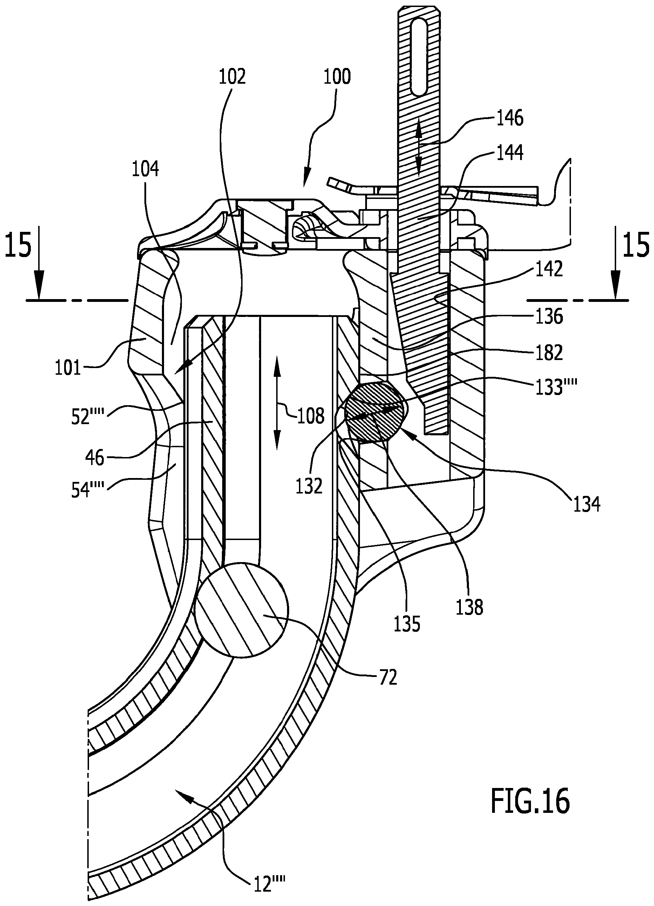

Bei einem fünften Ausführungsbeispiel der erfindungsgemäßen Haltekupplung, dargestellt in den Fig. 14 bis 16 sind diejenigen Elemente, die mit denen der voranstehenden Ausführungsbeispiele identisch sind, mit denselben Bezugszeichen versehen, so dass ebenfalls auf die Ausführungen zu diesen Ausführungsbeispielen verwiesen werden kann.

In gleicher Weise wie bei den voranstehenden Ausführungsbeispielen umfasst der Haltearm 12ʺʺ den ersten Armabschnitt 42, den zweiten Armabschnitt 44, und den dritten Armabschnitt 46, wobei alle drei Armabschnitte 42, 44, 46 durch ein im Querschnitt dreieckförmiges Rohrmaterial gebildet sind, das ebenfalls mit seinen gerundeten Kantenbereichen 182 im dritten Armabschnitt 46 den Ausrichtbereich 54ʺʺ mit der Außenkontur 52ʺʺ bildet.

Die für die Ausrichtung des Gehäuses 101 mittels der Ausrichtaufnahme 102, insbesondere deren zylindrischer Innenfläche 104, relevante Außenkontur 56ʺʺ ist im vierten Armabschnitt 46 durch die drei gerundeten Kantenbereiche 182 gebildet, wobei die gerundeten Kantenbereiche 182 so relativ zueinander angeordnet sind, dass sie an der zylindrischen Innenkontur 104 der Ausrichtaufnahme 102 anliegen und somit das Gehäuse 101 der Lastenträgerhalteeinrichtung 100 ausgerichtet halten.

Vorzugsweise sind die Kantenbereiche 182 so angeordnet, dass in einem der Kantenbereiche die Ausnehmung 132ʺʺ angeordnet ist, welche die Haltefläche 133ʺʺ bildet, die der Rastkörper 134 dann zum Fixieren der Lastenträgerhalteeinrichtung 100 an dem dritten Armabschnitt 46 hintergreifen kann.

In gleicher Weise wie bei den voranstehenden Ausführungsbeispielen sind zusätzlich die Positionierkörper 72 und 74 an dem Haltearm 12ʺʺ vorgesehen, auf welchen sich die Lastenträgerhalteeinrichtung 100 bei gleichzeitiger Führung der Ausrichtaufnahme 102 durch den Ausrichtbereich 54ʺʺ abstützt, wie im Zusammenhang mit den voranstehenden Ausführungsbeispielen beschrieben.

Besonders vorteilhaft ist es, wenn bei allen Ausführungsbeispielen der erfindungsgemäßen Haltekupplung 10, 10' und 10", 10‴, 10ʺʺ vorgesehen ist, dass die Außenfläche 56, 56', 56", 56‴, 56ʺʺ des jeweiligen Ausrichtbereichs 54, 54', 54", 54'", 54"" einen Maximaldurchmesser D aufweist, der 50 mm beträgt, so dass der Maximaldurchmesser D dem einer genormten Kupplungskugel entspricht.

Dies ermöglicht, auf den Haltearm 12 Lastenträgereinheiten 150 mit Lastenträgerhalteeinrichtungen 100 aufzusetzen, wie sie beispielsweise in der europäischen Patentanmeldung Nr. 2 759 421 A beschrieben sind und für Anhängekupplungen mit einer Kupplungskugel als Ausrichtbereich 54 und Positionierkörpern 72, 74 konzipiert sind, so dass bei den bekannten, für Anhängekupplungen mit einer Kupplungskugel konzipierten Lastenträgerhalteeinrichtungen keine konstruktiven Änderungen erforderlich sind.

Der Vorteil des erfindungsgemäß konzipierten Haltearms 12 mit dem beschriebenen Ausrichtbereich 54 beziehungsweise 54', 54", 54‴, 54ʺʺ ist jedoch der, dass an diesen das Anhängen eines Fahrzeuganhängers unmöglich ist, sondern lediglich an diesem Lastenträgereinheiten 150 montiert werden können, so dass der Haltearm 12 lediglich für die Montage von Lastenträgerhalteeinheiten und die Belastungen durch Lastenträgerhalteeinheiten konzipiert werden muss und die Belastungen, die beim Anhängerbetrieb auftreten können, nicht berücksichtigt werden müssen, da ein derartiges Anhängen eines Anhängers durch die konstruktive Ausführung des Ausrichtbereichs 54 nicht erfolgen kann.

## Patentansprüche

1. Haltekupplung für ein Kraftfahrzeug (22) zur Montage einer Lastenträgereinheit (150) an dem Kraftfahrzeug (22), umfassend einen mit einem ersten Ende (14) mittels eines Haltearmträgers (16) an einer Kraftfahrzeugkarosserie (20) montierbaren Haltearm (12), der an einem an ein zweites Ende (34) angrenzenden Armabschnitt (46) mit einer einen Anhängerbetrieb ausschließenden Lastenträgeraufnahme (90) versehen ist, wobei der Haltearm (12) einen sich entgegengesetzt zu einer Fahrtrichtung von dem Haltearmträger (16) weg erstreckenden ersten Haltearmabschnitt aufweist, welcher in einen zweiten, relativ zum ersten Armabschnitt (42) gekrümmten Armabschnitt (44) übergeht, an welchen sich ein dritter, in einer Tragstellung mit seiner Mittelachse (48) ungefähr parallel zu einer vertikalen Richtung verlaufender Armabschnitt (46) anschließt, der mit der Lastenträgeraufnahme (90) versehen ist, wobei die Lastenträgeraufnahme (90) einen an dem dritten Armabschnitt (46) nahe des zweiten Endes (34) des Haltearms angeordneten nichtsphärisch geformten Ausrichtbereich (54) aufweist,
**dadurch gekennzeichnet , dass** an dem Haltearm (12) auf einer dem zweiten Ende (34) gegenüberliegenden Seite des Ausrichtbereichs (54) auf einander gegenüberliegenden Seiten Positionierkörper (72, 74) angeordnet sind, die sich quer zu dem jeweiligen, diese tragenden Armabschnitt (46) von diesem weg erstrecken und die umfangsseitig quer zu einer Außenfläche (62) des Haltearms (12) verlaufende Positionierflächen (82, 84) tragen.

2. Haltekupplung nach Anspruch 1, **dadurch gekennzeichnet, dass** eine Außenkontur (52) des Ausrichtbereichs (54) in einer durch die Mittelachse (48) des dritten Armabschnitts (46) verlaufenden geometrischen Querschnittsebene im Bereich ihres maximalen Abstandes (Amax) von der Mittelachse (48) Krümmungsradien aufweist, die mindestens dem zweifachen maximalen Abstand (Amax) der Außenkontur (52) von der Mittelachse (48) entsprechen, und/oder dass insbesondere eine Außenkontur (52) des Ausrichtbereichs (54) rotationssymmetrisch, jedoch räumlich nichtsphärisch, zur Mittelachse (48) des dritten Armabschnitts (46) ausgebildet ist.

3. Haltekupplung nach einem der voranstehenden Ansprüche, **dadurch gekennzeichnet, dass** die Außenkontur (52) des Ausrichtbereichs (54) bezüglich der Mittelachse (48) als Rotationsellipsoid oder ähnlich eines Fasskörpers ausgebildet ist.

4. Haltekupplung nach einem der voranstehenden Ansprüche, **dadurch gekennzeichnet, dass** die Außenkontur (52) des Ausrichtbereichs (54) in einer senkrecht zu einer Mittelachse (48) des Halteabschnitts verlaufenden Querschnittsfläche bei einer Drehung um die Mittelachse (48) als Drehachse eine mindestens zweizählige, insbesondere eine mindestens dreizählige Symmetrie bezüglich der Drehung um die Mittelachse (48) aufweist, dass insbesondere der Ausrichtbereich (54"', 54"") gerundete Kantenbereiche (172, 182) aufweist, die an einer Innenseite einer geometrischen Zylinderfläche anliegend angeordnet sind.

5. Haltekupplung nach einem der voranstehenden Ansprüche, **dadurch gekennzeichnet, dass** die Außenkontur (52) des Ausrichtbereichs (54) zylindrisch ausgebildet ist.

6. Haltekupplung nach einem der voranstehenden Ansprüche, **dadurch gekennzeichnet, dass** der Haltearm (12) mit dem ersten Armabschnitt (42), dem zweiten Armabschnitt (44) und dem dritten Armabschnitt (46) als einstückiges Teil ausgebildet ist.

7. Haltekupplung nach einem der voranstehenden Ansprüche, **dadurch gekennzeichnet, dass** der Haltearm (12) mit dem ersten Armabschnitt (42), dem zweiten Armabschnitt (44) und dem dritten Armabschnitt (46) aus einem Rundmaterial geformt ist, dass insbesondere der Haltearm (12) mit dem ersten Armabschnitt (42), dem zweiten Armabschnitt (44) und dem dritten Armabschnitt (46) aus einem Rohrstück geformt ist, und/oder dass insbesondere Rundmaterial des Haltearms (12) im ersten Armabschnitt (42) einen Durchmesser aufweist, der einen Durchmesser des Rundmaterials im dritten Armabschnitt (46) entspricht.

8. Haltekupplung nach einem der voranstehenden Ansprüche, **dadurch gekennzeichnet, dass** die Positionierkörper (72, 74) an den Haltearm (12) angeformt sind.

9. Haltekupplung nach einem der Ansprüche 1 bis 7, **dadurch gekennzeichnet, dass** die Positionierkörper (72, 74) an dem Haltearm (12) durch Fügen fixiert sind.

10. Haltekupplung nach einem der Ansprüche 1 bis 7, **dadurch gekennzeichnet, dass** die Positionierkörper (72, 74) durch Endbereiche eines den Haltearm (12) durchsetzenden und diesen fixierenden Bolzens (78) gebildet sind.

11. Haltekupplung nach einem der voranstehenden Ansprüche, **dadurch gekennzeichnet, dass** die Positionierkörper (72, 74) auf einander gegenüberliegenden Seiten und spiegelsymmetrisch zu einer Längsmittelebene (LM) des Haltearms (12) angeordnet sind, und/oder dass insbesondere die Positionierkörper (72, 74) in einem Abstand von dem zweiten Ende (34) des Haltearms (12) angeordnet sind, der mindestens dem 2-fachen, höchstens jedoch dem 4-fachen eines maximalen Abstandes (Amax) der Außenkontur (52) des Ausrichtbereichs (54) von der Mittelachse (58) entspricht.

12. Haltekupplung nach einem der voranstehenden Ansprüche, **dadurch gekennzeichnet, dass** an dem dritten Armabschnitt (46) eine Haltefläche (133) angeordnet ist, welche ein Rastkörper (134) einer Lastenträgerhalteeinrichtung (100) hintergreifen kann.

13. Lastenträgereinheit für eine eine Lastenträgeraufnahme (90) aufweisende Haltekupplung (10), für eine Haltekupplung nach einem der voranstehenden Ansprüche, umfassend eine Lastenträgerhalteeinrichtung (100) mit einer Ausrichtaufnahme (102) zur Aufnahme des Ausrichtbereichs (54) und fest mit der Ausrichtaufnahme verbundene Positionieraufnahmen (112) zur Aufnahme der Positionierkörper (72, 74) der Lastenträgeraufnahme (90).

14. Lastenträgereinheit nach Anspruch 13, **dadurch gekennzeichnet, dass** die Lastenträgerhalteeinrichtung (100) sich ausgehend von der Ausrichtaufnahme (102) erstreckende Seitenwangen (106) aufweist, in welchen die Positionieraufnahmen (112) angeordnet sind, und/oder dass insbesondere die Positionieraufnahmen (112) so ausgebildet sind, dass diese eine in Aufsetzrichtung (108) der Lastenträgerhalteeinrichtung (100) auf die Lastenträgeraufnahme (90) vorneliegende Aufnahmeöffnungen (114) aufweisen, durch welche die Positionierkörper (72, 74) in die Positionieraufnahmen (112) eintauchen können, dass insbesondere die Positionieraufnahmen (112) im Anschluss an die Aufnahmeöffnung (114) einander gegenüberliegende Führungswände (116, 118) aufweisen, zwischen denen die Positionierkörper (72, 74) in ihrer in die Positionieraufnahmen (112) eingetauchten Stellung liegen.

15. Lastenträgereinheit nach einem der Ansprüche 13 oder 14, **dadurch gekennzeichnet, dass** die Positionieraufnahmen (112) jeweils eine sich quer zu den Führungswänden (116, 118) erstreckende Tragwand (122) aufweisen, mit denen sich die Lastenträgerhalteeinrichtung (100) in Schwerkraftrichtung auf durch Umfangsflächenbereichen der Positionierkörper (72, 74) gebildeten Stützflächen abstützt.

16. Lastenträgereinheit nach einem der Ansprüche 13 bis 15, **dadurch gekennzeichnet, dass** die Lastenträgerhalteeinrichtung (100) mit einem Rastkörper (134) versehen ist, welcher in einer quer zur Aufsetzrichtung (108) verlaufenden Rastrichtung (138) bewegbar geführt ist und zur Fixierung der Lastenträgerhalteeinrichtung (100) an der Lastenträgeraufnahme (90) eine von der Lastenträgeraufnahme (90) gebildete Haltefläche hintergreift und somit eine Bewegung der Lastenträgerhalteeinrichtung (100) entgegengesetzt zur Aufsetzrichtung (108) verhindert.

## Claims

1. A holder coupling for a motor vehicle (22) for mounting a load carrier unit (150) on the motor vehicle (22), comprising a holder arm (12), which can be mounted with a first end (14) by means of a holder arm carrier (16) on a motor vehicle body (20) and which, at an arm portion (46) adjoining a second end (34), is provided with a load carrier receptacle (90) precluding trailer operation, wherein the holder arm (12) has a first holder arm portion, which extends away from the holder arm carrier (16), opposite the direction of travel, and which transitions into a second arm portion (44) which is curved relative to the first arm portion (42) and which is adjoined by a third arm portion (46), which, in a carrying position, runs with its centre axis (48) approximately parallel to a vertical direction and which is provided with the load carrier receptacle (90), wherein the load carrier receptacle (90) has a non-spherically shaped orientation region (54) on the third arm portion (46) in the vicinity of the second end (34) of the holder arm,
**characterised in that** positioning bodies (72, 74) are arranged on mutually opposed sides on the holder arm (12) on a side of the orientation region (54) opposite the second end (34), the positioning bodies extending transversely to and away from the respective arm portion (46) carrying them and the positioning bodies carrying positioning faces (82,84) running peripherally transversely to an outer face (62) of the holder arm (12).

2. A holder coupling in accordance with claim 1, **characterised in that** an outer contour (52) of the orientation region (54), in a geometric cross-sectional plane running through the centre axis (48) of the third arm portion (46), in the region of its maximum spacing (Amax) from the centre axis (48), has radii of curvature which correspond at least to twice the maximum spacing (Amax) of the outer contour (52) from the centre axis (48), and/or **in that** in particular an outer contour (52) of the orientation region (54) is rotationally symmetrical, but spatially non-spherical, to the centre axis (48) of the third arm portion (46).

3. A holder coupling in accordance with any of the preceding claims, **characterised in that** the outer contour (52) of the orientation region (54) is formed, in relation to the centre axis (48), as a rotational ellipsoid or similarly to a barrel body.

4. A holder coupling in accordance with any of the preceding claims, **characterised in that** the outer contour (52) of the orientation region (54), in a cross-sectional area running perpendicularly to a centre axis (48) of the holder portion, in the event of rotation about the centre axis (48) as rotation axis, has an at least two-fold, in particular an at least three-fold symmetry in relation to the rotation about the centre axis (48), **in that** in particular the orientation region (54"', 54"") has rounded edge regions (172, 182), which are arranged bearing against an inner side of a geometrical cylinder face.

5. A holder coupling in accordance with any of the preceding claims, **characterised in that** the outer contour (52) of the orientation region (54) is cylindrical.

6. A holder coupling in accordance with any of the preceding claims, **characterised in that** the holder arm (12) is formed with the first arm portion (42), the second arm portion (44) and the third arm portion (46) as an integral part.

7. A holder coupling in accordance with any of the preceding claims, **characterised in that** the holder arm (12) is formed with the first arm portion (42), the second arm portion (44) and the third arm portion (46) from a round material, **in that** in particular the holder arm (12) is formed with the first arm portion (42), the second arm portion (44) and the third arm portion (46) from a tube piece, and/or **in that** in particular round material of the holder arm (12) in the first arm portion (42) has a diameter that corresponds to a diameter of the round material in the third arm portion (46).

8. A holder coupling in accordance with any of the preceding claims, **characterised in that** the positioning bodies (72, 74) are moulded on the holder arm (12).

9. A holder coupling in accordance with any of the claims 1 to 7, **characterised in that** the positioning bodies (72, 74) are fixed to the holder arm (12) by joining.

10. A holder coupling in accordance with any of the claims 1 to 7, **characterised in that** the positioning bodies (72, 74) are formed by end regions of a bolt (78) passing through the holder arm (12) and fixing it.

11. A holder coupling in accordance with any of the preceding claims, **characterised in that** the positioning bodies (72, 74) are arranged on mutually opposed sides and mirror-symmetrically to a longitudinal centre plane (LM) of the holder arm (12), and/or **in that** in particular the positioning bodies (72, 74) are arranged at a spacing from the second end (34) of the holder arm (12), which corresponds to at least twice, but at most four times a maximum spacing (Amax) of the outer contour (52) of the orientation region (54) from the centre axis (58).

12. A holder coupling in accordance with any of the preceding claims, **characterised in that** a holding surface (133) is arranged on the third arm portion (46), which holding surface can engage behind a detent body (134) of a load carrier holder device (100).

13. A load carrier unit for a holder coupling (10) having a load carrier receptacle (90), for a holder coupling in accordance with any of the preceding claims, comprising a load carrier holder device (100) with an orientation receptacle (102) for receiving the orientation region (54) and positioning receptacles (112) fixedly connected to the orientation receptacle for receiving the positioning bodies (72, 74) of the load carrier receptacle (90).

14. A load carrier unit in accordance with claim 13, **characterised in that** the load carrier holder device (100) has side cheeks (106) which extend starting from the orientation receptacle (102) and in which the positioning receptacles (112) are arranged, and/or **in that** in particular the positioning receptacles (112) are formed such that they each have a receiving opening (114) arranged to the front in the attaching direction (108) of the load carrier holder device (100) on the load carrier receptacle (90), through which receiving openings the positioning bodies (72, 74) can project into the positioning receptacles (112), and **in that** in particular the positioning receptacles (112) have mutually opposed guide walls (116, 118) adjoining the receiving opening (114), between which guide walls the positioning bodies (72, 74) lie when in their position projecting into the positioning receptacles (112).

15. A load carrier unit in accordance with either of claims 13 or 14, **characterised in that** the positioning receptacles (112) each have a support wall (122) extending transversely to the guide walls (116, 118), by means of which supporting wall the load carrier holder device (100) is supported in the direction of the force of gravity on support faces formed by peripheral face regions of the positioning bodies (72, 74).

16. A load carrier unit in accordance with claims 13 to 15, **characterised in that** the load carrier holder device (100) is provided with a detent body (134), which is guided movably in a detent direction (138) running transversely to the attaching direction (108) and, in order to fix the load carrier holder device (100) on the load carrier receptacle (90) engages behind a holding surface formed by the load carrier receptacle (90) and thus prevents a movement of the load carrier holder device (100) opposite to the attaching direction (108).

## Revendications

1. Couplage de maintien pour un véhicule à moteur (22) pour le montage d'une unité de support de charges (150) sur le véhicule à moteur (22), comprenant un bras de maintien (12) pouvant être monté avec une première extrémité (14) au moyen d'un support de bras de maintien (16) sur une carrosserie de véhicule à moteur (20), qui est pourvu sur une section de bras (46), jouxtant une deuxième extrémité (34), d'un logement de support de charges (90) excluant un fonctionnement de remorque, dans lequel le bras de maintien (12) présente une première section de bras de maintien s'étendant à l'opposé par rapport à une direction de déplacement de manière à s'éloigner du support de bras de maintien (16), laquelle devient une deuxième section de bras (44) incurvée par rapport à la première section de bras (42), à laquelle se raccorde une troisième section de bras (46) s'étendant dans une position de support avec son axe central (48) approximativement de manière parallèle par rapport à une direction verticale, qui est pourvue du logement de support de charges (90), dans lequel le logement de support de charges (90) présente une zone d'alignement (54) formée de manière non sphérique disposée sur la troisième section de bras (46) à proximité de la deuxième extrémité (34) du bras de maintien,
**caractérisé en ce que** sont disposés sur le bras de maintien (12) sur un côté, faisant face à la deuxième extrémité (34), de la zone d'alignement (54), sur des côtés se faisant face, des corps de positionnement (72, 74), qui s'étendent de manière transversale par rapport à la section de bras (46) respective, supportant ceux-ci, de manière à s'en éloigner et qui supportent des surfaces de positionnement (82, 84) s'étendant du côté périphérique de manière transversale par rapport à une surface extérieure (62) du bras de maintien (12).

2. Couplage de maintien selon la revendication 1, **caractérisé en ce qu'**un contour extérieur (52) de la zone d'alignement (54) présente, dans un plan de section transversale géométrique s'étendant à travers l'axe central (48) de la troisième section de bras (46), dans la zone de sa distance maximale (Amax) par rapport à l'axe central (48), des rayons d'incurvation qui correspondent au moins deux fois la distance maximale (Amax) du contour extérieur (52) par rapport à l'axe central (48), et/ou qu'en particulier un contour extérieur (52) de la zone d'alignement (54) est réalisé de manière symétrique en rotation, toutefois de manière non sphérique spatialement, par rapport à l'axe central (48) de la troisième section de bras (46).

3. Couplage de maintien selon l'une quelconque des revendications précédentes, **caractérisé en ce que** le contour extérieur (52) de la zone d'alignement (54) par rapport à l'axe central (48) est réalisé en tant qu'ellipsoïde de rotation ou de manière similaire à un corps de contenant.

4. Couplage de maintien selon l'une quelconque des revendications précédentes, **caractérisé en ce que** le contour extérieur (52) de la zone d'alignement (54) présente, dans une surface de section transversale s'étendant de manière perpendiculaire par rapport à un axe central (48) de la section de maintien, lors d'une rotation autour de l'axe central (48), en tant qu'axe de rotation, une symétrie à au moins deux chiffres, en particulier une symétrie à au moins trois chiffres par rapport à la rotation autour de l'axe central (48), qu'en particulier la zone d'alignement (54‴, 54ʺʺ) présente des zones d'arête (172, 182) arrondies, qui sont disposées de manière à reposer sur un côté intérieur d'une surface cylindrique géométrique.

5. Couplage de maintien selon l'une quelconque des revendications précédentes, **caractérisé en ce que** le contour extérieur (52) de la zone d'alignement (54) est réalisé de manière cylindrique.

6. Couplage de maintien selon l'une quelconque des revendications précédentes, **caractérisé en ce que** le bras de maintien (12) est réalisé en tant que partie d'un seul tenant avec la première section de bras (42), la deuxième section de bras (44) et la troisième section de bras (46).

7. Couplage de maintien selon l'une quelconque des revendications précédentes, **caractérisé en ce que** le bras de maintien (12) est formé avec la première section de bras (42), la deuxième section de bras (44) et la troisième section de bras (46) à partir d'un matériau rond, qu'en particulier le bras de maintien (12) est formé avec la première section de bras (42), la deuxième section de bras (44) et la troisième section de bras (46) à partir d'une pièce tubulaire, et/ou qu'en particulier du matériau rond du bras de maintien (12) dans la première section de bras (42) présente un diamètre qui correspond à un diamètre du matériau rond dans la troisième section de bras (46).

8. Couplage de maintien selon l'une quelconque des revendications précédentes, **caractérisé en ce que** les corps de positionnement (72, 74) sont formés sur le bras de maintien (12).

9. Couplage de maintien selon l'une quelconque des revendications 1 à 7, **caractérisé en ce que** les corps de positionnement (72, 74) sont fixés par des joints d'assemblage sur le bras de maintien (12).

10. Couplage de maintien selon l'une quelconque des revendications 1 à 7, **caractérisé en ce que** les corps de positionnement (72, 74) sont formés par des zones d'extrémité d'un boulon (78) traversant le bras de maintien (12) et fixant celui-ci.

11. Couplage de maintien selon l'une quelconque des revendications précédentes, **caractérisé en ce que** les corps de positionnement (72, 74) sont disposés sur des côtés se faisant face les uns les autres et de manière symétrique en miroir par rapport à un plan central longitudinal (LM) du bras de maintien (12), et/ou qu'en particulier les corps de positionnement (72, 74) sont disposés à une distance par rapport à la deuxième extrémité (34) du bras de maintien (12), qui correspond à au moins deux fois, au maximum toutefois à 4 fois une distance maximale (Amax) du contour extérieur (52) de la zone d'alignement (54) par rapport à l'axe central (58).

12. Couplage de maintien selon l'une quelconque des revendications précédentes, **caractérisé en ce qu'**est disposée sur la troisième section de bras (46) une surface de maintien (133), laquelle peut venir en prise par l'arrière avec un corps d'enclenchement (134) d'un dispositif de maintien de support de charges (100).

13. Unité de support de charges pour un couplage de maintien (10) présentant un logement de support de charges (90), pour un couplage de maintien selon l'une quelconque des revendications précédentes, comprenant un dispositif de maintien de support de charges (100) avec un logement d'alignement (102) pour loger la zone d'alignement (54) et des logements de positionnement (112) reliés de manière solidaire au logement d'alignement pour loger les corps de positionnement (72, 74) du logement de support de charges (90).

14. Unité de support de charges selon la revendication 13, **caractérisée en ce que** le dispositif de maintien de support de charges (100) présente des joues latérales (106) s'étendant en partant du logement d'alignement (102), dans lesquelles sont disposés les logements de positionnement (112), et/ou qu'en particulier les logements de positionnement (112) sont réalisés de telle sorte que ceux-ci présentent des ouvertures de logement (114) situées à l'avant dans la direction de placement (108) du dispositif de maintien de support de charges (100) sur le logement de support de charges (90), par lesquelles les corps de positionnement (72, 74) peuvent plonger dans les logements de positionnement (112), qu'en particulier les logements de positionnement (112) présentent des parois de guidage (116, 118) se faisant face les unes les autres dans le prolongement de l'ouverture de logement (114), entre lesquelles les corps de positionnement (72, 74) se situent dans leur position plongée dans les logements de positionnement (112).

15. Unité de support de charges selon l'une quelconque des revendications 13 ou 14, **caractérisée en ce que** les logements de positionnement (112) présentent respectivement une paroi de support (122) s'étendant de manière transversale par rapport aux parois de guidage (116, 118), avec lesquelles le dispositif de maintien de support de charges (100) prend appui dans la direction de pesanteur sur des surfaces d'appui formées par des zones de surfaces périphériques des corps de positionnement (72, 74).

16. Unité de support de charges selon l'une quelconque des revendications 13 à 15, **caractérisée en ce que** le dispositif de maintien de support de charges (100) est pourvu d'un corps d'enclenchement (134), lequel est guidé de manière à pouvoir être déplacé dans une direction d'enclenchement (138) s'étendant de manière transversale par rapport à la direction de placement (108) et vient en prise par l'arrière avec une surface de maintien formée par le logement de support de charges (90) pour fixer le dispositif de maintien de support de charges (100) sur le logement de support de charges (90) et empêche ainsi un déplacement du dispositif de maintien de support de charges (100) à l'opposé par rapport à la direction de placement (108).
